# EUROPEAN PATENT SPECIFICATION

(11) **EP 2 664 854 B1**
(45) Date of publication and mention of the grant of the patent: **30.06.2021**
(21) Application number: 13167093.7
(22) Date of filing: 08.05.2013
(51) Int. Cl.: F23R 3/34

(54) **Secondary combustion system**
Sekundäres Verbrennungssystem
Système de combustion secondaire

(30) Priority: 14.05.2012 US 201213470577
(43) Date of publication of application: 20.11.2013
(73) Proprietor: General Electric Company, Schenectady, NY 12345 (US)
(72) Inventor: Haynes, Joel Meier, Niskayuna, NY New York 12309 (US); Johnson, Thomas Edward, Greenville, SC South Carolina 29615 (US)
(74) Representative: BRP Renaud & Partner mbB Rechtsanwälte Patentanwälte Steuerberater

(56) References cited:
- US-A- 4 887 425
- US-A1- 2001 049 932
- US-A1- 2010 175 386
- US-A1- 2010 294 858
- US-A1- 2011 030 375
- US-B1- 6 868 676
- None

## Description

The present application relates generally to gas turbine engines and more particularly relate to a combustor for use with a gas turbine engine having an enhanced secondary combustion system for improved emissions and performance.

In a conventional gas turbine engine, operational efficiency generally increases as the temperature of the combustion stream increases. Higher combustion stream temperatures, however, may result in the production of higher levels of nitrogen oxides ("NOx") and other types of undesirable emissions. Such emissions may be subject to both federal and state regulation in the United States and also may be subject to similar regulations abroad. A balancing act thus exists between operating the gas turbine engine within an efficient temperature range while also ensuring that the output of nitrogen oxides and other types of regulated emissions remain well below mandated levels. Many other parameters also may be varied in providing such an optimized balance.

Several types of known gas turbine engine designs, such as those using Dry-Low NOx ("DLN") combustors, generally premix the flows of fuel and air upstream of a reaction or a combustion zone so as to reduce nitrogen oxide emissions via a number of premixing fuel nozzles. Generally described, such premixing tends to reduce overall combustion temperatures and, hence, nitrogen oxide emissions and the like while providing operational efficiency.

A further method to reduce overall nitrogen oxide emissions may be to minimize the reaction zone temperatures below the level at which nitrogen oxide emissions are formed. As such, a secondary combustion system may be positioned downstream of the primary combustion system. The secondary combustion system may include a number of injectors to inject fuel and other fluids at the head end of the combustor. The fuel burns quickly due to the high temperature environment and then relieves the temperature at the combustor head end so as to reduce overall nitrogen oxide emissions. A gas turbine combustor showing the features of the preamble of claim 1 is known from US 6,868,676 B1. Although such secondary combustion systems may be effective in reducing overall emissions, such systems may have a reliability concern given that the fuel injectors are positioned directly in the hot gas pathway.

There is thus a desire for an improved combustor with reduced overall emissions of nitrogen oxides and the like. Preferably such a combustor may provide improved emissions without compromising overall output, efficiency, and component reliability.

The herein claimed invention relates to a secondary combustion system as set forth in the claims.

Various features and improvements of the present application will become apparent to one of ordinary skill in the art upon review of the following detailed description when taken in conjunction with the several drawings and the appended claims.

Various aspects and embodiments of the present invention will now be described in connection with the accompanying drawings, in which:
Fig. 1 is a schematic diagram of a gas turbine engine with a compressor, a combustor, and a turbine.
Fig. 2 is a side cross-sectional view of a secondary fuel injector that may be used with the combustor of Fig. 1.
Fig. 3 is a schematic cross-section of an example of a combustor as may be described herein.
Fig. 4 is a side view of a secondary combustion system of the combustor of Fig. 3.
Fig. 5 is a side cross-sectional view of a fuel jet of the secondary combustion system of
Fig. 4.

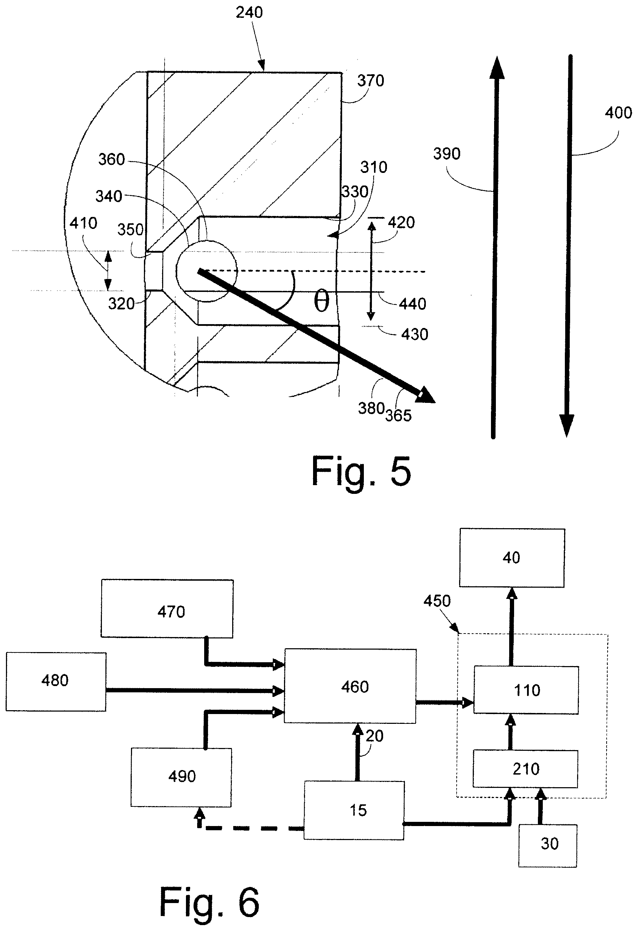

Fig. 6 is a schematic diagram of a combustor with an auxiliary injection system as may be described herein.

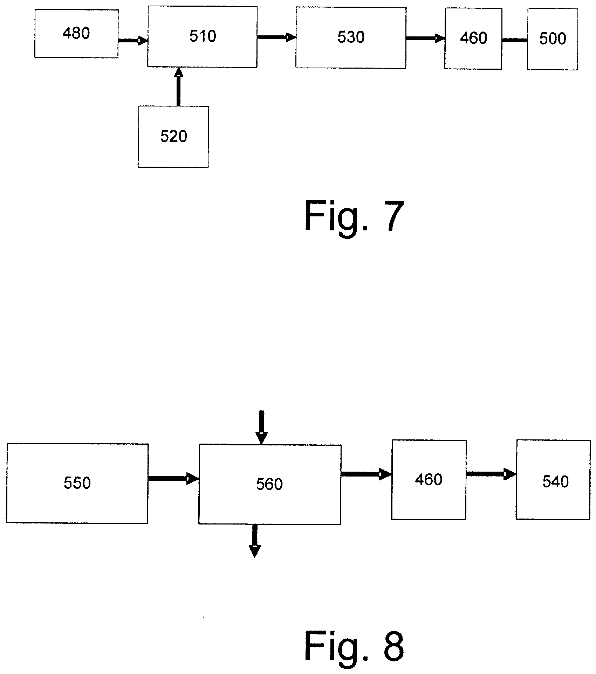

Fig. 7 is a schematic diagram of a combustor with a fuel reforming system as may be described herein.
Fig. 8 is a schematic diagram of a combustor with a supply of off gas as may be described herein.

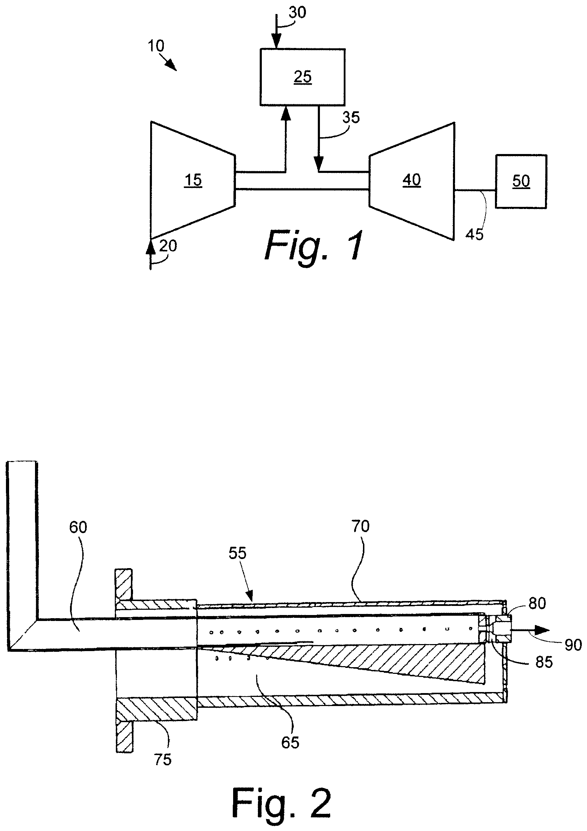

Referring now to the drawings, in which like numerals refer to like elements throughout the several views, Fig. 1 shows a schematic view of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft 45 and an external load 50 such as an electrical generator and the like.

The gas turbine engine 10 may use natural gas, various types of syngas, and/or other types of fuels. The gas turbine engine 10 may be any one of a number of different gas turbine engines offered by General Electric Company, including, but not limited to, those such as a 7 or a 9 series heavy duty gas turbine engine and the like. The gas turbine engine 10 may have different configurations and may use other types of components. Other types of gas turbine engines also may be used herein. Multiple gas turbine engines, other types of turbines, and other types of power generation equipment also may be used herein together.

The combustor 25 described above may have a primary combustion system and a secondary combustion system. If the secondary combustion system is used, Fig. 2 shows an example of a known secondary injector 55 for use therein. Generally described, the secondary injector 55 may include a fuel passage 60 in communication with the flow of fuel 30 and an air passage 65 in communication with the flow of air 20. The secondary injector 55 may have an elongated wall 70 extending from a coupling 75. The secondary injector 55 may have one or more jets 80 in communication with the fuel passage 60 and the air passage 65. The fuel passage 60 and the air passage 65 may meet at a mixing passage 85 about the jet 80 and create a fuel/air mixture 90. The fuel/air mixture 90 may be introduced into the flow of combustion gases 35 in a generally transverse direction. Other components and other configurations also may be used herein.

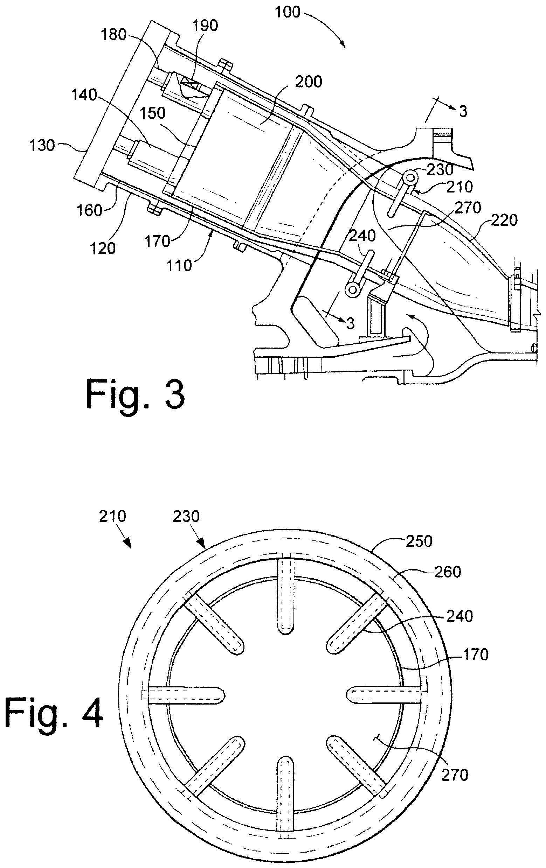

Fig. 3 shows a combustor 100 as may be described herein. The combustor 100 may include a primary combustion system 110. Generally described, the primary combustion system 110 may include a casing 120, an end cover 130, a number of nozzles 140, a cap assembly 150, a flow sleeve 160, and a combustion liner 170. The nozzles 140 may include a number of premixing nozzles 180. The premixing nozzles 180 may include a swirler 190 thereon. A primary combustion zone 200 may be positioned downstream of the nozzles 140 within the combustion liner 170. Other components and other configurations may be used herein.

The flow of air 20 from the compressor 15 may flow along an incoming air path between the flow sleeve 160 and the combustion liner 170. The flow of air 20 then may reverse path about the end cover 130 and mix with the flow of fuel 30 about the nozzles 140. The flow of air 20 and the flow of fuel 30 may combust within the primary combustion zone 200 so as to form the hot combustion gases 35. Other components and other configurations may be used herein.

As is shown in Fig. 3 and Fig. 4, the combustor 100 also includes a secondary combustion system 210. The secondary combustion system 210 is positioned downstream of the primary combustion zone 200 and just upstream of a transition piece 220 and the turbine 40. The secondary combustion system 210 includes a manifold ring 230 with a number of secondary injectors 240 extending therefrom. The secondary injectors 240 extend into the flow of hot combustion gases 35. The manifold ring 230 may include an air manifold 250 and a fuel manifold 260 in communication with the secondary injectors 240. As will be described in more detail below, the secondary injectors 240 may include a number of air orifices and a number of fuel orifices. A secondary combustion zone 270 extends from the manifold ring 230 downstream towards the transition piece 220. Other components and other configurations may be used herein. A further flow of air 20 and a further flow of fuel 30 may be injected into the hot combustion gases 35 from the secondary injectors 240 of the secondary combustion system 210. The hot combustion gases 35 exiting the primary combustion zone 200 thus may ignite this secondary mixture. Generally described, the resulting secondary reactions reach substantial completion within the transition piece 220 and before entrance into the turbine 40 so as to reduce the temperature and the emissions therein.

Fig. 5 shows a portion of the secondary injector 240 as is described herein. The secondary injector 240 has a number of jets 310 positioned thereon. Each jet 310 may extend from an entrance 320 to an exit 330. The entrance 320 may begin at a mixing passage 340 in communication with a fuel passage 350 and an air passage 360 so as to create a fuel/air mixture 365. The exit 330 may extend along a wall 370 of the secondary injector 240. As described above, the known secondary injector 55 introduces the fuel/air mixture 90 in a general transverse direction to the flow of hot combustion gases 35. In this example, however, the jets 310 of the secondary injector 240 may have an angled configuration 380 for introducing the fuel/air mixture 365. Specifically, the jets 310 may have an angle Θ with respect to the wall 370 of the injector 240. The jets 310 may have the angled configuration 380 with an upstream configuration 390 with respect to the flow of combustion gases 35 so as to increase the mixing rate with reduced penetration. The jets 310 also may have the angled configuration 380 with a downstream configuration 400 so as to improve flame liftoff. The angle Θ may vary herein.

The jets 310 of the injector 240 also may have an entrance diameter 410 about the entrance 320 near the mixing passage 340 and an exit diameter 420 about the exit 330 along the wall 370. The exit diameter 420 may be increased with respect to the entrance diameter 410 so as to allow for more flow and more penetration of the fuel/air mixture 365 into the primary stream. Alternatively, the exit diameter 420 may be reduced to increase the overall flow velocity of the fuel/air mixture 365. Fig. 5 thus shows a large diameter 430 equal to or greater than the entrance diameter 410 and a small diameter 440 equal to or less than the entrance diameter 410. Jets 310 with other diameters also may be used herein. Moreover, jets 310 with differing diameters may be used together herein. Other components and other configurations also may be used herein.

Fig. 6 shows an alternative embodiment of a combustor 450 as may be described herein. The combustor 450 may include the primary combustion system 110 and the secondary combustion system 210 generally as described above. Likewise, the combustor 450 may be in communication with the flow of fuel 30 and the flow of air 20 from the compressor 15. The combustor 450 also may provide the flow of combustion gases 35 to the turbine 40. The combustor 450, however, may include an auxiliary injection system 460. The auxiliary injection system 460 may be in communication with an auxiliary diluent compressor 470, and auxiliary fuel compressor 480, an auxiliary air compressor 490, as well as the compressor 15. The secondary combustion system 210 thus may be supplied with the pressurized fuel/air and/or diluent so as to increase the velocity of the fuel/air flow 365 passing through the jets 310. Increasing the velocity of the fuel/air flow 365 thus may increase the overall pressure about the secondary combustion system 210. Other components and other configurations also may be used herein.

Fig. 7 shows an alternative embodiment of a combustor 500 as may be described herein. In this example, the auxiliary injection system 460 also may be in communication with a fuel reformer 510. The fuel reformer 510 may be in communication with the auxiliary fuel compressor 480 as well as a steam or catalytic component input 520 so as to reform the flow of fuel 30. The steam or catalytic component 520 may be removed in a gas separator 530 before flowing to the auxiliary injection system 460. The use of the fuel reformer 510 thus changes the heating value of the fuel/air flow 365 exiting the jets 310. Other components and other configurations may be used herein.

Fig. 8 shows a further embodiment of a combustor as may be described herein. In this example, the auxiliary injection system 460 may be in communication with a low BTU gasifier 550 via a heat exchanger 560. The low BTU gasifier 550 thus may provide an off gas to the auxiliary injection system 460 for use therein. The use of the low BTU gasifier 550 thus changes the heating value of the fuel/air flow 365 exiting the jets 310. Other components and other configurations may be used herein.

The combustors described herein with the secondary combustion system 210 and the secondary injectors 240 thus provides variations in jet angle, diameter, velocity, and/or heating value so as to reduce overall emissions. Specifically, the desired injector stream heating value and composition, the jet angle, the diameter, and the velocity may be determined and varied. Altering the jet angle may increase the mixing rate with reduced penetration and/or provide improved flame off. The diameter of the jets may be increased to allow for more flow and penetration or reduced to increase overall velocity. Increased velocity also may be provided by increasing the pressure to the injectors. Likewise, the heating value may be altered via the fuel reformer or the gasifier. The combination of these features thus allows for more rapid mixing and/or increased flame off so as to result in overall reduce emissions without sacrificing efficiency and overall output.

It should be apparent that the foregoing relates only to certain embodiments of the present application. Numerous changes and modifications may be made herein by one of ordinary skill in the art without departing from the scope of the invention as defined by the following claims and the equivalents thereof.

## Claims

1. Combustor (25) of a gas turbine engine (10), the combustor (25) comprising a primary combustion system (110) and a secondary combustion system (210) for introducing a fuel/air mixture (365) into a flow of combustion gases (35) in the combustor (25), the secondary combustion system (210) comprising:
a manifold ring (230); and
a plurality of injectors (240) extending from the manifold ring (230);
the plurality of injectors (240) comprising a plurality of jets (310) in communication with the manifold ring (230);
wherein each jet comprises a fuel passage (350) and an air passage (360) and a mixing passage (340) in communication with the fuel passage and the air passage so as to create the fuel/air mixture (365) therein and in that one or more of the plurality of jets (310) comprises an angled configuration for the introduction of the fuel/air mixture into the flow of combustion gases at an angle (Θ) with respect to the flow of combustion gases (35) and with respect to the wall (370) of the injector (240), **characterized in that** the angled configuration of the one or more of the plurality of jets comprises at least one of an upstream configuration with respect to the flow of combustion gases so as to achieve increasing the mixing rate with reduced penetration and a downstream configuration with respect to the flow of combustion gases so as to achieve improving flame liftoff.

2. The combustor (25) of claim 1, wherein the manifold ring (230) comprises an air manifold and a fuel manifold.

3. The combustor (25) of any preceding claim, wherein each of the plurality of jets (310) comprises an entrance with an entrance diameter and an exit with an exit diameter.

4. The combustor (25) of the preceding claim, wherein the entrance diameter is equal to or greater than the exit diameter.

5. The combustor (25) of claim 3, wherein the entrance diameter is equal to or lesser than the exit diameter.

6. The combustor (25) of any preceding claim, further comprising an auxiliary injection system (460) in communication with the plurality of injectors (240).

7. The combustor (25) of the preceding claim, wherein the auxiliary injection system (460) is in communication with an auxiliary fuel compressor, an auxiliary air compressor, and/or an auxiliary diluent compressor.

8. The combustor (25) of any of the two preceding claims, wherein the auxiliary injection system (460) is in communication with a fuel reformer and a steam or catalytic component.

9. The combustor (25) of any of the three preceding claims, wherein the auxiliary injection system (460) is in communication with a low BTU gasifier.

## Patentansprüche

1. Brennkammer (25) eines Gasturbinentriebwerks (10), wobei die Brennkammer (25) ein primäres Verbrennungssystem (110) und ein sekundäres Verbrennungssystem (210) zum Einbringen eines Kraftstoff-Luft-Gemischs (365) in einen Strom von Verbrennungsgasen (35) in der Brennkammer (25) umfasst, wobei das sekundäre Verbrennungssystem (210) umfasst:
einen Verteilerring (230); und
eine Vielzahl von Injektoren (240), die sich von dem Verteilerring (230) aus erstrecken;
wobei die Vielzahl von Injektoren (240) eine Vielzahl von Düsen (310) umfasst, die mit dem Verteilerring (230) in Verbindung stehen;
wobei jede Düse einen Kraftstoffdurchgang (350) und einen Luftdurchgang (360) und einen Mischdurchgang (340) in Verbindung mit dem Kraftstoffdurchgang und dem Luftdurchgang umfasst, wodurch das Kraftstoff-LuftGemisch (365) darin erzeugt wird, und dass eine oder mehrere der Vielzahl von Düsen (310) eine abgewinkelte Konfiguration zum Einbringen des Kraftstoff-Luft-Gemischs in den Strom von Verbrennungsgasen in einem Winkel (Θ) in Bezug auf den Strom von Verbrennungsgasen (35) und in Bezug auf die Wand (370) des Injektors (240) umfasst, **dadurch gekennzeichnet, dass** die abgewinkelte Konfiguration des einen oder der mehreren der Vielzahl von Düsen mindestens eines von einer vorgelagerten Konfiguration in Bezug auf den Strom von Verbrennungsgasen umfasst, wodurch eine Erhöhung der Mischungsrate mit reduzierter Penetration erreicht wird, und einer nachgelagerten Konfiguration in Bezug auf den Strom von Verbrennungsgasen, wodurch eine Verbesserung des Flammenabhebens erreicht wird.

2. Brennkammer (25) nach Anspruch 1, wobei der Verteilerring (230) einen Luftverteiler und einen Kraftstoffverteiler umfasst.

3. Brennkammer (25) nach einem der vorstehenden Ansprüche, wobei jede der Vielzahl von Düsen (310) einen Einlass mit einem Eintrittsdurchmesser und einen Auslass mit einem Austrittsdurchmesser umfasst.

4. Brennkammer (25) nach dem vorstehenden Anspruch, wobei der Eintrittsdurchmesser gleich oder größer ist als der Austrittsdurchmesser.

5. Brennkammer (25) nach Anspruch 3, wobei der Eintrittsdurchmesser gleich oder kleiner ist als der Austrittsdurchmesser.

6. Brennkammer (25) nach einem der vorstehenden Ansprüche, ferner umfassend ein Hilfseinspritzsystem (460), das mit der Vielzahl von Injektoren (240) in Verbindung steht.

7. Brennkammer (25) nach dem vorhergehenden Anspruch, wobei das Hilfseinspritzsystem (460) mit einem Hilfskraftstoffverdichter, einem Hilfsluftverdichter und/oder einem Hilfsverdünnungsmittelverdichter in Verbindung steht.

8. Brennkammer (25) nach einem der beiden vorstehenden Ansprüche, wobei das Hilfseinspritzsystem (460) mit einem Kraftstoffreformer und einer Dampf- oder Katalysatorkomponente in Verbindung steht.

9. Brennkammer (25) nach einem der drei vorstehenden Ansprüche, wobei das Hilfseinspritzsystem (460) mit einem Low-BTU-Vergaser in Verbindung steht.

## Revendications

1. Chambre de combustion (25) d'un moteur de turbine à gaz (10), la chambre de combustion (25) comprenant un système de combustion primaire (110) et un système de combustion secondaire (210) pour introduire un mélange carburant/air (365) dans un écoulement de gaz de combustion (35) dans la chambre de combustion (25), le système de combustion secondaire (210) comprenant :
un anneau de collecteur (230) ; et
une pluralité d'injecteurs (240) s'étendant depuis l'anneau de collecteur (230) ;
la pluralité d'injecteurs (240) comprenant une pluralité de jets (310) en communication avec l'anneau de collecteur (230) ;
dans laquelle chaque jet comprend un passage de carburant (350) et un passage d'air (360) et un passage de mélange (340) en communication avec le passage de carburant et le passage d'air afin de créer le mélange carburant/air (365) dans celui-ci et en ce qu'un ou plusieurs de la pluralité de jets (310) comprend une configuration angulaire pour l'introduction du mélange carburant/air dans l'écoulement de gaz de combustion à un angle (Θ) par rapport à l'écoulement de gaz de combustion (35) et par rapport à la paroi (370) de l'injecteur (240), **caractérisée en ce que** la configuration angulaire de l'un ou plusieurs de la pluralité de jets comprend au moins l'une parmi une configuration en amont par rapport à l'écoulement de gaz de combustion afin d'obtenir l'augmentation de la vitesse de mélange avec une pénétration réduite et une configuration en aval par rapport à l'écoulement de gaz de combustion afin d'obtenir l'amélioration du décollement de la flamme.

2. Chambre de combustion (25) selon la revendication 1, dans laquelle l'anneau de collecteur (230) comprend un collecteur d'air et un collecteur de carburant.

3. Chambre de combustion (25) selon une quelconque revendication précédente, dans laquelle chacun de la pluralité de jets (310) comprend une entrée avec un diamètre d'entrée et une sortie avec un diamètre de sortie.

4. Chambre de combustion (25) selon la revendication précédente, dans laquelle le diamètre d'entrée est égal ou supérieur au diamètre de sortie.

5. Chambre de combustion (25) selon la revendication 3, dans laquelle le diamètre d'entrée est égal ou inférieur au diamètre de sortie.

6. Chambre de combustion (25) selon une quelconque revendication précédente, comprenant en outre un système d'injection auxiliaire (460) en communication avec la pluralité d'injecteurs (240).

7. Chambre de combustion (25) selon la revendication précédente, dans laquelle le système d'injection auxiliaire (460) est en communication avec un compresseur de carburant auxiliaire, un compresseur d'air auxiliaire, et/ou un compresseur de diluant auxiliaire.

8. Chambre de combustion (25) selon l'une quelconque des deux revendications précédentes, dans laquelle le système d'injection auxiliaire (460) est en communication avec un reformeur de carburant et un composant de vapeur ou catalytique.

9. Chambre de combustion (25) selon l'une quelconque des trois revendications précédentes, dans laquelle le système d'injection auxiliaire (460) est en communication avec un gazéifieur de BTU faible.
